# EUROPÄISCHE PATENTANMELDUNG

(11) **EP 1 612 914 A2**
(43) Veröffentlichungstag der Anmeldung: **04.01.2006**
(21) Anmeldenummer: 05007598.5
(22) Anmeldetag: 07.04.2005
(51) Int. Cl.: H02K 3/26

(54) **Voice-Coil-Motor und damit ausgestattetes Positioniergerät**

(30) Priorität: 24.06.2004 DE 102004030500
(71) Anmelder: Dr. Johannes Heidenhain GmbH, 83292 Traunreut (DE)
(72) Erfinder: Scheglmann, Gerhard, 83324 Ruhpolding (DE); Höfer, Volker, 83301 Traunreut (DE)

(57) **Zusammenfassung**

Die Erfindung betrifft einen Voice-Coil-Motor (V) bestehend aus einem Stator (S) und einem Rotor (R), welcher relativ zum Stator (S) schwenkbar um eine Schwenkachse (A) gelagert ist. Der Rotor (R) und / oder der Stator (S) weist eine Leiterplatte (2) mit mindestens einer Leiterbahn (2.1) auf, und die mindestens eine Leiterbahn (2.1) ist derart ausgebildet, dass diese in einer Ebene zumindest eine Windungseinheit (2.11 bis 2.18) bildet, welche aus mehreren Leiterbahnspuren besteht. Dabei weisen innerhalb einer Windungseinheit (2.11 bis 2.18) mehr als zwei Leiterbahnspuren einen Abschnitt (2.11a, 2.11 b bis 2.18a, 2.18b) auf, in welchem die jeweilige Leiterbahnspur zur Schwenkachse (A) hin ausgerichtet ist.

## Beschreibung

Die Erfindung betrifft einen Voice-Coil-Motor gemäß dem Oberbegriff des Anspruchs 1, und ein Positioniergerät gemäß dem Oberbegriff des Anspruchs 11. Die Erfindung ist insbesondere zur präzisen Bewegung eines Schwenkarmes für einen Servo-Track-Writer geeignet.

Derartige Positioniergeräte werden, wie oben erwähnt, häufig in Servo-Track-Writern (STW) eingesetzt, wo die Spuren oder Tracks für magnetisierbare Festplatten eingerichtet, beziehungsweise geschrieben werden. Dabei wird im STW durch einen Voice-Coil-Motor bzw. Schwenkantrieb in dem Positioniergerät eine Welle geschwenkt, an der ein Schwenkarm befestigt ist. An dessen Ende ist ein Schreibkopf vorgesehen, der letztlich durch die Schwenkbewegung der Welle bewegt und hochpräzise positioniert wird, so dass möglichst viele Spuren pro Flächeneinheit der Festplatte konfiguriert werden können. Die Anzahl der Spuren, die pro Flächen- beziehungsweise Durchmessereinheit (Tracks per Inch) eingerichtet sind, ist ein Maß für die Speicherkapazität von Festplatten. Aus diesem Grund werden permanent Anstrengungen unternommen, eine möglichst enge Spureneinteilung zu erreichen. Damit eine Konfiguration von Festplatten mit enger Spureneinteilung beim Festplattenhersteller wirtschaftlich vorgenommen werden kann, muss eine exakte Positionierung des Schwenkarmes des STW in sehr kurzer Zeit möglich sein (Seek and Settle Time).

In der Patentschrift DE 196 37 953 A1 ist ein Voice-Coil-Motor gezeigt, dessen Stator als eine Leiterplatte ausgestaltet ist. Diese Leiterplatte weist eine Leiterbahn auf, die derart ausgebildet ist, dass sie eine Windungseinheit bildet. Diese Windungseinheit besteht aus einer Leiterbahn mit mehreren, nebeneinander liegenden und parallel verlaufenden Leiterbahnspuren.

Die bekannten Voice-Coil-Motoren und die entsprechenden Positioniergeräte haben den Nachteil, dass deren Genauigkeit und deren Seek and Settle Time höchste Anforderungen nicht erfüllen.

Der Erfindung liegt daher die Aufgabe zugrunde, einen Voice-Coil-Motor zu realisieren, welcher hervorragende Betriebseigenschaften aufweist, bzw. ein Positioniergerät zu schaffen welches eine überaus genaue Positionierung sowie sehr kurze Seek and Settle Zeiten ermöglicht, bei vergleichsweise geringem Herstellungsaufwand bzw. einfachem Betrieb.

Diese Aufgabe wird erfindungsgemäß durch die Schaffung eines Voice-Coil-Motors mit den Merkmalen des Patentanspruchs 1 gelöst, bzw. durch ein Positioniergerät mit den Merkmalen des Patentanspruchs 11.

Wichtig für das gute Funktionieren, insbesondere für die Reduzierung der Seek and Settle Time des Positioniergerätes, ist demnach Ausrichtung von Leitebahnspuren in bestimmten Abschnitten auf einer Leiterplatte.

Das erfindungsgemäße Positioniergerät hat den Vorteil, dass es eine technisch einfache sowie wirtschaftlich günstige Bauweise bzw. eine überaus genaue und schnelle Positionierung ermöglicht. Darüber hinaus wird durch die Erfindung eine Schwenkbewegung erreicht, die sich durch eine gleichmäßige und konstante Winkelgeschwindigkeit auszeichnet. Dies ist insbesondere bei STWs eine vorteilhafte Betriebseigenschaft.

Es hat sich nunmehr gezeigt, dass Ungenauigkeiten bei der Positionierung eines Rotors bzw. Schwenkarmes an einer schwenkbaren Welle in nicht zu vernachlässigbarem Maße durch Schwingungen verursacht werden, die vom Voice-Coil-Motor eingeleitet werden. Dabei sind insbesondere Motorkräfte störend, welche eine bezüglich der Schwenkachse radiale Richtungskomponente aufweisen.

Durch eine verbesserte Ausrichtung derjenigen Abschnitte von Leiterbahnspuren, die zur Einleitung der erforderlichen Kräfte für die Drehung des Schwenkarms wirksam sind, kann das Schwingungsverhalten überraschend positiv verändert werden. Innerhalb einer Windungseinheit weisen demnach mehr als zwei Leiterbahnspuren mindestens einen Abschnitt auf, in welchem die jeweilige Leiterbahnspur zur Schwenkachse hin ausgerichtet ist. Abweichend von herkömmlichen Leiterbahnführungen auf Leiterplatten weisen mithin Leiterbahnspuren in den wirksamen Abschnitten keinen parallelen Verlauf, sondern eine zur Schwenkachse weisende Ausrichtung auf. Bedeutsam ist also in diesem Zusammenhang, dass die Ausrichtung, bzw. der Verlauf der Leiterbahnspuren in den wirksamen Abschnitten so gestaltet ist, dass in Summe praktisch keine radial gerichteten Kräfte durch den Voice-Coil-Motor erzeugt werden.

Im Folgenden ist unter dem Begriff Windungseinheit ein Bereich einer Leiterbahn zu verstehen, welcher der Funktion nach eine elektromagnetische Spule bildet. Dabei kann die Windungseinheit vorzugsweise aus mehreren Leiterbahnspuren bestehen. Leiterbahnspuren sind nebeneinander liegende Leiterbahnbereiche innerhalb einer Windungseinheit. Beispielsweise kann eine Windungseinheit aus einer im Prinzip spiralförmig gestalteten Leiterbahn bestehen, wobei die Leiterbahn so verläuft, dass mehrere Leiterbahnspuren nebeneinander zu liegen kommen.

Der erfindungsgemäße Voice-Coil-Motor kann entweder am Stator oder am Rotor oder sowohl am Stator als auch am Rotor mit einer entsprechend ausgestalteten Leiterplatte versehen sein. Häufig ist nur der Stator oder der Rotor mit der Leiterplatte ausgerüstet, so dass das jeweilige Gegenstück mit Permanentmagneten bestückt ist.

Die entsprechende Leiterplatte kann als eine einschichtige Leiterplatte ausgestaltet sein, bei der auf einer oder auf beiden Seiten entsprechende Leiternahnspuren aufgebracht sind. Zur Steigerung des erreichbaren Drehmoments kann aber auch die Leiterplatte als Mehrschichtleiterplatte realisiert sein, wobei dann mit Vorteil eine Vielzahl von Leiterbahnspuren übereinander liegend innerhalb des Mehrschichtaufbaus angeordnet sein können.

Mit Vorteil weisen im Voice-Coil-Motor mehr als 25%, insbesondere mehr als 50%, und insbesondere mehr als 75% aller Leiterbahnspuren jeweils mindestens einen Abschnitt auf, in welchem die jeweilige Leiterbahnspur zur Schwenkachse hin ausgerichtet ist.

Besonders vorteilhaft ist es, wenn das erfindungsgemäße Positioniergerät, mit einer hochgenauen Positionsmesseinrichtung kombiniert wird, die mit einer fotoelektrischen Abtastung, insbesondere nach einem interferentiellen Messprinzip, arbeitet. Durch diese Kombination werden Synergieeffekte erreicht, durch die es möglich ist, ein extrem genaues und schnelles Positioniergerät zu schaffen.

Weitere Vorteile der Erfindung werden bei der nachfolgenden Beschreibung eines Ausführungsbeispiels anhand der Figuren deutlich werden.

Es zeigen die
- Figur 1: eine Schnittdarstellung durch das erfindungsgemäße Positioniergerät,
- Figur 2: eine Draufsicht auf eine Mehrschichtleiterplatte, wie sie als Primärteil am Rotor des Voice-Coil-Motors verwendet wird,
- Figur 3a: eine Draufsicht auf die erste vereinzelte Lage der Mehrschichtleiterplatte,
- Figur 3b: eine Draufsicht auf die zweite vereinzelte Lage der Mehrschichtleiterplatte,
- Figur 3c: eine Draufsicht auf die dritte vereinzelte Lage der Mehrschichtleiterplatte,
- Figur 3d: eine Draufsicht auf die vierte vereinzelte Lage der Mehrschichtleiterplatte.

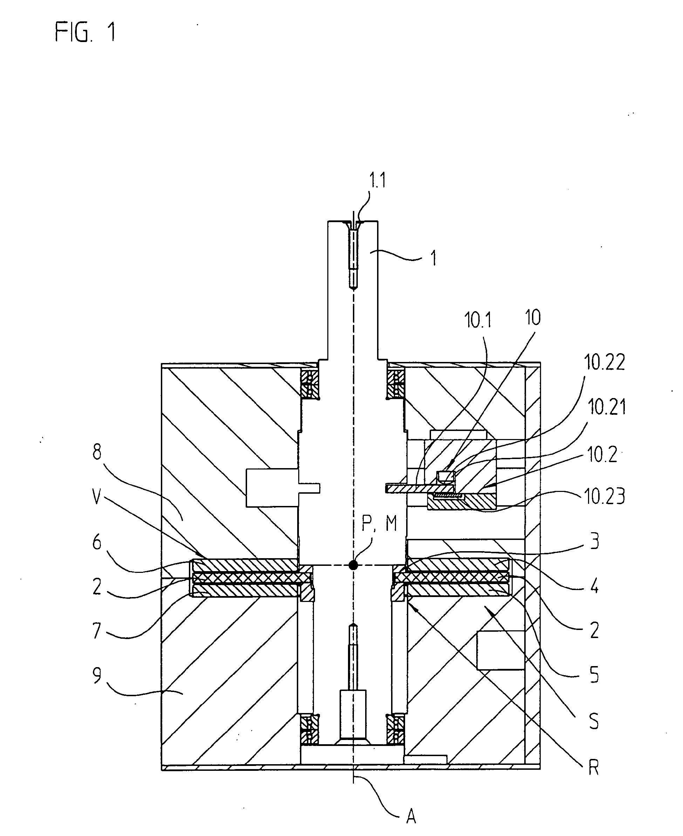

In der Figur 1 ist ein Positioniergerät dargestellt, wie es im Zusammenhang mit STWs eingesetzt wird. Eine Welle 1 ist demnach um eine Schwenkachse A schwenkbar und weist ein Wellenende 1.1 auf, an dem ein, in der Figur 1 nicht dargestellter, Schwenkarm zum Beschreiben einer Festplatte befestigt werden kann.

Die Schwenkbewegung, im gezeigten Ausführungsbeispiel ist ein Schwenkbereich bis zu ± 90° möglich, wird durch einen sogenannten Voice-Coil-Motor V, einem elektrischen Direktantrieb, eingeleitet. Das Primärteil des Voice-Coil-Motors V ist als eine Mehrschichtleiterplatte 2 ausgestaltet, welche im gezeigten Beispiel als Rotor R innerhalb des Schwenkbereiches arbeitet. Der Rotor R umfasst neben der Mehrschichtleiterplatte 2 einen Befestigungsring 3, welcher verdrehfest mit der Welle 1 zur Übertragung eines Drehmoments verbunden ist.

Das Sekundärteil umfasst Permanentmagnete 4, 5, 6, 7 die auf Magnetträgern 8, 9 aus ferromagnetischem Werkstoff entlang einer Kreislinie befestigt sind. Das Sekundärteil wirkt im Betrieb des Positioniergerätes wie eine Drehmomentstütze und nimmt nicht an der Schwenkbewegung der Welle 1 teil, und stellt daher im gezeigten Ausführungsbeispiel einen Stator S dar. Der Voice-Coil-Motor V arbeitet folglich nach dem Prinzip eines synchronen Direktantriebs. Durch die beidseitige Anordnung der Permanentmagnete 4, 5, 6, 7 wird ein homogenes Magnetfeld erzeug, was insbesondere für gute Betriebseigenschaften des Voice-Coil-Motors V von Bedeutung ist.

Der Schwenkwinkel der Welle 1 wird von einer Positionsmesseinrichtung 10 gemessen, die nach einem ähnlichen Wirkprinzip arbeitet, wie es in der Offenlegungsschrift EP 0 978 708 A1 der Anmelderin beschrieben ist. Die Positionsmesseinrichtung 10 besteht demzufolge aus einem transparenten Phasengitter 10.1, welches die Form eines Segments einer Ringscheibe hat, so dass der gesamte Schwenkbereich abgetastet werden kann. Das transparente Phasengitter 10.1 ist dabei verdrehfest mit der Welle 1 verbunden, so dass dieses an den Schwenkbewegungen der Welle 1 teilnimmt.

Dem gegenüber liegt die nicht-drehbare Abtasteinheit 10.2 der Positionsmesseinrichtung 10. Die Abtasteinheit 10.2 besteht aus einer Lichtquelle 10.21, welche beispielsweise als LED ausgestaltet ist, einer Kondensorlinse 10.22 und einem Maßstabssegment 10.23, sowie (in der Figur 1 nicht-dargestellten) Fotodetektoren zum Empfangen der modulierten Lichtstrahlen. Das Maßstabssegment 10.23 ist als Reflexionsphasengitter beziehungsweise als Stufengitter ausgebildet. Das heißt, dass auf einer reflektierenden Oberfläche reflektierende Striche aufgebracht sind, im gezeigten Beispiel, mit einer Höhe von 0,2 µm. Dadurch, dass das Maßstabssegment 10.23 nicht an der Schwenkbewegung teilnimmt und so stets der Lichtquelle 10.21 gegenüber liegt, kann dieses, verglichen mit dem schwenkbaren Phasengitter 10.1, klein ausgeführt werden.

Das von der als LED ausgestalteten Lichtquelle 10.21 erzeugte Licht tritt im Betrieb des Positioniergerätes zunächst durch die Kondensorlinse 10.22 und danach durch das transparente Phasengitter 10.1, welches gebeugte Strahlenanteile erzeugt und eine Phasenänderung der Lichtwellen verursacht. Die derart veränderten Lichtstrahlen gelangen sodann auf das Maßstabssegment 10.23 in Form des Reflexionsphasengitters. Dort werden sie erneut gebeugt und es tritt eine weitere Phasenänderung der Lichtwellen auf. Die reflektierten und gebeugten Lichtstrahlen treten dann wieder durch das transparente Phasengitter 10.1 und werden erneut gebeugt und interferieren. Die derart modulierten Strahlenbündel treffen dann auf Fotodetektoren, die sich im Bereich der Lichtquelle 10.21 befinden, und in der Schnittdarstellung der Figur 1 nicht sichtbar sind. Die Fotodetektoren wandeln die Lichtsignale in elektrische Signale um, welche danach zur Gewinnung der Lageinformationen entsprechend weiterverarbeitet werden. Die Verwendung des vergleichsweise kleinen Maßstabssegments 10.23 als nicht rotierendes Bauteil hat insbesondere den Vorteil, dass die Toleranzen bezüglich des Planschlages des Maßstabssegments 10.23 nicht so eng gewählt werden müssen als dies der Fall wäre, wenn das Maßstabssegment 10.23 im Betrieb rotieren würde.

In einer alternativen Ausgestaltung der Positionsmesseinrichtung 10 umfasst die Abtasteinheit 10.2 ein sog. VCSEL (Vertical Cavity Surface Emitting Laser) als Lichtquelle 10.21. Von dieser Lichtquelle 10.21 wird ein Strahlenbündel emittiert, das sich entlang der Richtung einer optischen Achse ausbreitet. Im wesentlichen handelt es sich beim emittierten Strahlenbündel vorzugsweise um eine TEM 00 Mode eines Gauß'schen Strahles, der vom verwendeten VCSEL emittiert wird. Das emittierte Strahlenbündel weist aufgrund der VCSEL-Abstrahlcharakteristik eine bestimmte Divergenz auf und wird mittels der Kondensorlinse 10.22 umgeformt. Die Strahlumformung des emittierten, divergenten Strahlenbündels erfolgt vorzugsweise dergestalt, dass nach der Kondensorlinse 10.22 ein annähernd kollimiertes Strahlenbündel vorliegt, das in einem bestimmten Abstand von der Kondensorlinse 10.22 eine Strahltaille besitzt. Als Strahltaille sei in diesem Zusammenhang diejenige Stelle im Strahlquerschnitt entlang der Strahlausbreitungsrichtung verstanden, an der das Strahlenbündel seine minimale Fläche bzw. Querausdehnung aufweist. Im Bereich der Strahltaille ist das Phasengitter 10.1 angeordnet, auf welches das umgeformte Strahlenbündel auftrifft. Die Anordnung des Phasengitters 10.1 an dieser Stelle hat den Vorteil, dass dadurch die Anbautoleranz, sowohl in radialer bzw. tangentialer Richtung, wie auch in Richtung der Strahlausbreitung, also in axialer Richtung, vergrößert wird. Grundsätzlich ist für eine hohe Anbautoleranz in dieser Richtung eine Beleuchtung des Phasengitters 10.1 mit einem Strahlenbündel geringer Divergenz und einem kleinem Strahldurchmesser anzustreben. Da sich diese Größen bei einer vorgegebenen Wellenlänge nicht beliebig minimieren lassen, ist ein Kompromiss für die optimale Anordnung des Phasengitters 10.1 zu finden. Ein derartiger Kompromiss ergibt sich durch die Anordnung des Phasengitters 10.1 in der Strahltaille des emittierten bzw. umgeformten Strahlenbündels, wo das Produkt aus Divergenz und Strahldurchmesser der TEM 00 Mode eines Gauß'schen Strahles ein Minimum aufweist. Das Phasengitter 10.1 bewirkt eine Aufspaltung des einfallenden Strahlenbündels in erste und zweite Teilstrahlenbündel, die sich von der optischen Achse weg ausbreiten. Die so veränderten Strahlenbündel treffen, wie im Zusammenhang mit der ersten Alternative der Positionsmesseinrichtung 10 bereits beschrieben, auch hier auf die Fotodetektoren, die sich im Bereich der Lichtquelle 10.21 befinden. Durch die Fotodetektoren werden die Lichtsignale in positionsabhängige elektrische Signale umgewandelt.

Gerade bei der Verwendung einer derartig hochauflösenden interferentiellen Positionsmesseinrichtung 10 ist eine Optimierung des Betriebsverhaltens des Voice-Coil-Motors V von besonderem Vorteil, um eine möglichst hohe Steigerung der Genauigkeit und der Schnelligkeit des Positioniergerätes in seiner Gesamtheit zu erreichen. Aus diesem Grund wurde die Konstruktion des Voice-Coil-Motors V konstruktiv modifiziert.

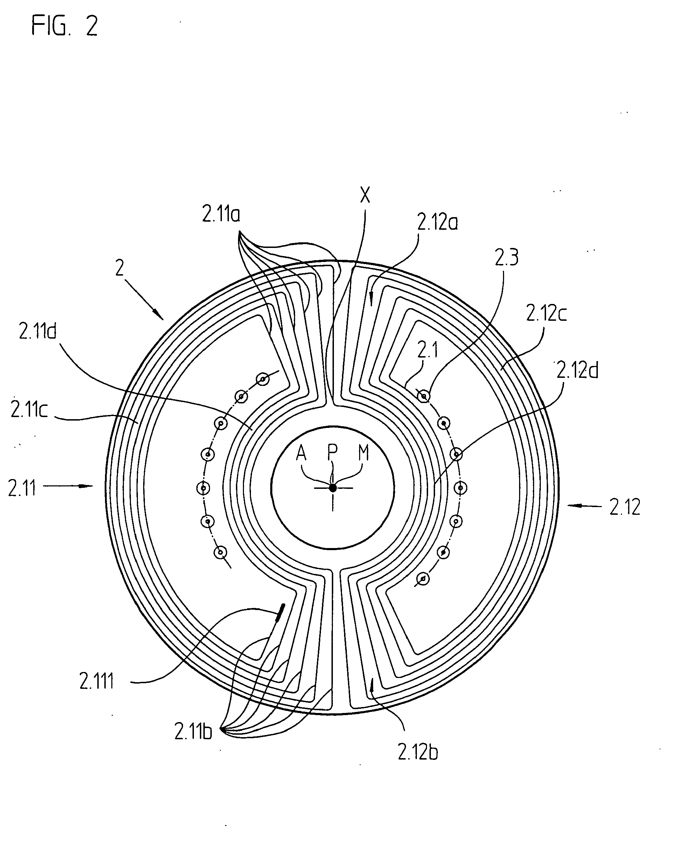

In der Figur 2 ist eine nicht-maßstabsgetreue Draufsicht auf die Mehrschichtleiterplatte 2 gezeigt, welche insgesamt aus vierzehn übereinanderliegenden Lagen besteht. Auf der Oberfläche einer jeden Lage ist eine Leiterbahn 2.1 aufgebracht, wobei im gezeigten Ausführungsbeispiel die Leiterbahn 2.1 eine Breite von 1,25 mm und eine Dicke von 70 µm aufweist. Auf der Mehrschichtleiterplatte 2 wird ein Mindestabstand zwischen den einzelnen Spuren der Leiterbahn 2.1 von 250 µm nicht unterschritten. Da die Figur 2 eine Draufsicht auf die Mehrschichtleiterplatte 2 ist, ist hier nur die oberste bzw. erste Lage der Mehrschichtleiterplatte 2 zu sehen.

Der Verlauf der Leiterbahn 2.1 der obersten Lage der Mehrschichtleiterplatte 2 ist so ausgestaltet, dass zwei Windungseinheiten 2.11, 2.12 gebildet werden. Diese beiden Windungseinheiten 2.11, 2.12 befinden sich in einer Ebene - nämlich in der Ebene der obersten Lage der Mehrschichtleiterplatte 2 - und bilden der Funktion nach zwei elektromagnetische Spulen.

Die erste Windungseinheit 2.11 beginnt an einer Lötanschlussfläche 2.111 für eine in der Figur 2 nicht dargestellte Versorgungsleitung. Die Leiterbahn 2.1 weist im Bereich der ersten Windungseinheit 2.11 einen spiralähnlichen Verlauf auf, wobei die Leiterbahn 2.1 gemäß der Figur 2 im Uhrzeigersinn orientiert ist. In der Figur 2 verläuft also die erste Windungseinheit 2.11 auf der linken Hälfte der oberersten Lage der Mehrschichtleiterplatte 2. Das spiralähnliche Muster der Leiterbahn 2.1 hat zur Folge, dass im Bereich der ersten Windungseinheit 2.11 bei einem Stromfluss durch die Leiterbahn 2.1 ein Magnetfeld entsteht, welches dem einer im Uhrzeigersinn gewickelten Drahtspule entspricht. Bei herkömmlichen Drahtspulen wird häufig nur ein Draht verwendet, der dann, nach dem Wickeln, in mehreren nebeneinander liegenden Lagen vorliegt. Der Draht in herkömmlichen Spulen entspricht also hier der Leiterbahn 2.1. Folglich entspricht dann eine Lage des Drahts in üblichen Spulen (bzw. ein Windungsgang) hier im Ausführungsbeispiel einer Leiterbahnspur. Analog zu den Drahtlagen in herkömmlichen Spulen, liegen hier demnach mehrere Leiterbahnspuren der Leiterbahn 2.1 nebeneinander, und zwar auf der ersten Lage der Mehrschichtleiterplatte 2.

Wenn man, ausgehend von der Lötanschlussfläche 2.111, dem Verlauf der Leiterbahn 2.1 folgt, so gelangt man nach der ersten Windungseinheit 2.11, welche im Uhrzeigersinn orientiert ist, an einen Wendepunkt X. Ab dem Wendepunkt X tritt dann die Leiterbahn 2.1 in den Bereich der zweiten Windungseinheit 2.12 ein. Die zweite Windungseinheit 2.12 ist nunmehr in der Figur 2 entgegen dem Uhrzeigersinn orientiert, und die Leiterbahn 2.1 verläuft im Bereich der zweiten Windungseinheit 2.12 ebenso in mehreren nebeneinander liegenden Leiterbahnspuren. Am Ende der Leiterbahn 2.1 befindet sich auf der ersten Lage der Mehrschichtleiterplatte 2 ein Durchkontaktierungspunkt 2.3 durch den ein elektrischer Kontakt zur nächsten Lage der Mehrschichtleiterplatte 2 hergestellt wird.

In sogenannten Parallelabschnitten 2.11 c, 2.11d, 2.12c, 2.12d der beiden Windungseinheiten 2.11, 2.12 sind die Leiterbahnspuren der Leiterbahn 2.1 parallel auf Teilkreisen mit jeweils unterschiedlichen Radien, aber mit einem gemeinsamen Mittelpunkt M angeordnet, wobei sich der Mittelpunkt M auf der Schwenkachse A in der Ebene der obersten Lage der Mehrschichtleiterplatte 2 befindet. Die Abstände von nebeneinander liegenden Leiterbahnspuren der Leiterbahn 2.1 sind in den Parallelabschnitten 2.11c, 2.11 d, 2.12c, 2.12d der Windungseinheiten 2.11, 2.12 gleich dem zulässigen Mindestabstand. Auf diese Weise wird erreicht, dass die Abschnitte 2.11a, 2.11 b, 2.12a, 2.12b, innerhalb derer die Leiterbahnspuren radial ausgerichtet sind, eine große wirksame Länge haben.

Bei den vorbekannten Anordnungen wird versucht die Leiterbahnspuren möglichst auf der gesamten Leiterplattenfläche parallel auszurichten, um ein maximales Magnetfeld zu schaffen. Im vorgestellten Ausführungsbeispiel weisen auf der verbesserten Mehrschichtleiterplatte 2 hingegen innerhalb jeder Windungseinheit 2.11, 2.12 alle Leiterbahnspuren Abschnitte 2.11a, 2.11b, 2.12a, 2.12b auf, innerhalb derer die Leiterbahnspuren radial, also zur Schwenkachse A hin ausgerichtet sind. Wie aus der Figur 2 zu entnehmen ist haben die Leiterbahnspuren aber auch Abschnitte 2.11 a, 2.11 b, 2.12a, 2.12b, welche nicht parallel verlaufen. Wenn durch die Leiterbahnspuren in den Abschnitten 2.11a, 2.11b, 2.12a, 2.12b Geraden gelegt werden, so schneiden sich diese Geraden in einem Punkt P auf der Schwenkachse A in der Ebene der obersten Lage der Mehrschichtleiterplatte 2 (im gezeigten Ausführungsbeispiel fällt der Punkt P mit dem oben erwähnten Mittelpunkt M zusammen). Mit anderen Worten sind die Leiterbahnspuren in den Abschnitten 2.11a, 2.11b, 2.12a, 2.12b, welche für die Erzeugung des Drehmoments wirksam sind, zur Schwenkachse A des Schwenkantriebs hin ausgerichtet, bzw. in streng radialer Richtung geführt.

Bedingt durch die radiale Ausrichtung, liegen in den Abschnitten 2.11a, 2.11 b, 2.12a, 2.12b notwendigerweise Bereiche vor, in denen der Mindestabstand zwischen zwei benachbarten Leiterbahnspuren überschritten wird. Dennoch zeigt der Voice-Coil-Motor, welcher die neuartig gestaltete Leiterbahn 2.1 aufweist, hervorragende Betriebseigenschaften. Denn durch die radiale Ausrichtung der Leiterbahnspuren in den Abschnitten 2.11 a, 2.11b, 2.12a, 2.12b sind Rotationskräfte erzeugbar, die selbst praktisch keine radiale Richtungskomponente aufweisen.

Im vorgestellten Ausführungsbeispiel sind, wie bereits erwähnt, alle Leiterbahnspuren in den Abschnitten 2.11 a, 2.11 b, 2.12a, 2.12b, welche also im Hinblick auf die Erzeugung des Drehmoments wirksam sind streng radial ausgerichtet. Im Gegensatz dazu weisen die übrigen Leiterbahnspuren der Leiterbahn 2.1 in den Parallelabschnitten 2.11 c, 2.11 d, 2.12c, 2.12d in ihrem Verlauf keine radiale Richtungskomponente auf, da der Abstand der jeweiligen Leiterbahnspur zur Schwenkachse A in den Parallelabschnitten 2.11c, 2.11d, 2.12c, 2.12d stets gleichbleibend ist. Die Windungseinheiten 2.11, 2.12 bestehen also aus nebeneinander liegenden Leiterbahnspuren die in den Parallelabschnitten 2.11 c, 2.11 d, 2.12c, 2.12d so angeordnet sind, dass dort ihr Verlauf keine radiale Richtungskomponente aufweist und dass andererseits in den Abschnitten 2.11 a, 2.11 b, 2.12a, 2.12b, welche auch als wirksame Abschnitte 2.11 a, 2.11 b, 2.12a, 2.12b bezeichnet werden können, eine radiale Ausrichtung der Leiterbahnspuren zur Schwenkachse A hin gegeben ist.

Abgesehen von vergleichsweise kleinen Teilflächen im Bereich der Lötanschlussfläche 2.111 und im Bereich des Durchkontaktierungspunkts 2.3 sind die Windungseinheiten 2.11, 2.12 bezüglich des Punkts P auf der Schwenkachse A, der sich in der Ebene der Windungseinheiten 2.11, 2.12 befindet, symmetrisch. Die Windungseinheiten 2.11, 2.12 sind demnach im Wesentlichen - also außer in den oben beschriebenen relativ kleinen Teilflächen - bezüglich des Punkts P symmetrisch angeordnet. Im beschriebene Ausführungsbeispiel sind die Leiterbahnspuren in den Abschnitten 2.11a, 2.11b, 2.12a, 2.12b punktsymmetrisch bezüglich des Punkts P angeordnet.

Es zeigte sich, dass gerade bei dieser Art des Verlaufes der Leiterbahn 2.1 eine hervorragend Laufruhe des Voice-Coil-Motors V erreichbar ist, und dass Schwingungen des Schwenkarms weitgehend vermieden werden können. Dies hat wiederum zur Folge, dass die Leistungsfähigkeit eines STWs wesentlich gesteigert werden kann, insbesondere ist es mit dem neuartigen STW in Verbindung mit dem Voice-Coil-Motor V möglich die Seek and Settle Time signifikant zu reduzieren.

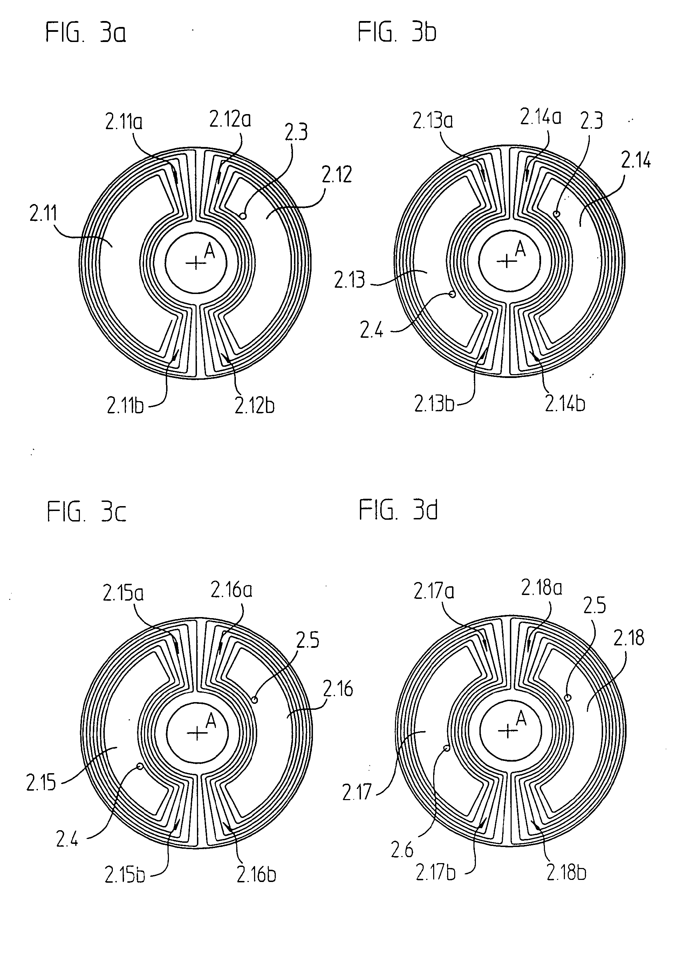

Zur Steigerung des Drehmoments des Voice-Coil-Motors V weist die Mehrschichtleiterplatte 2 insgesamt vierzehn übereinander liegende Lagen auf. In den Figur 3a bis 3d sind beispielhaft die oberen vier Lagen dargestellt.

Wie die übrigen Lagen der Mehrschichtleiterplatte 2, weisen auch die vier oberen Lagen gemäß den Figur 3a bis 3d jeweils zwei Windungseinheiten 2.11 bis 2.18 auf, wobei innerhalb einer Lage der spiralähnliche Verlauf benachbarter Windungseinheiten jeweils gegensinnig orientiert ist (Orientierung einmal im Uhrzeigersinn bzw. einmal gegen den Uhrzeigersinn).

Im vorgestellten Ausführungsbeispiel sind die Durchkontaktierungspunkte 2.3 bis 2.6, entlang einer Teilkreislinie versetzt angeordnet. Diese Positionierung der Durchkontaktierungspunkte 2.3 bis 2.6 der einzelnen Lagen der Mehrschichtleiterplatte 2 hat den Vorteil, dass die jeweils obere Lage im Bereich der Durchkontaktierung mit einer Durchgangsbohrung versehen werden kann, ohne dass dadurch Leiterbahnspuren durchtrennt werden würden. Die Abschnitte 2.11a, 2.11b, 2.12a, 2.12b; 2.11 c, 2.11d, 2.12c, 2.12d; 2.13a, 2.13b, 2.14a, 2.14b; 2.15c, 2.15d, 2.16c, 2.16d; 2.17c, 2.17d, 2.18c, 2.18d der Leiterbahnspuren der Windungseinheiten 2.11 bis 2.18 sind also auf unterschiedlichen Lagen der Mehrschichtleiterplatte 2 übereinanderliegend angeordnet.

Gemäß der Figur 3a ist die erste Lage der Mehrschichtleiterplatte 2 derart ausgestaltet, dass innerhalb beider Windungseinheiten 2.11, 2.12 sechs Leiterbahnspuren jeweils zwei Abschnitte 2.11a, 2.11b aufweisen, in welchem die jeweilige Leiterbahnspur zur Schwenkachse A hin ausgerichtet sind.

Dagegen sind, entsprechend der Figur 3b und 3d, die zweite und die vierte Lage der Mehrschichtleiterplatte 2 so ausgestaltet, dass nur innerhalb der Windungseinheiten 2.13, 2.17 sechs Leiterbahnspuren Abschnitte 2.13a, 2.13b, 2.17a, 2.17b aufweisen, innerhalb derer die Leiterbahnspuren zur Schwenkachse A hin ausgerichtet sind. Die Windungseinheiten 2.14, 2.18 haben indessen sieben Leiterbahnspuren, mit Abschnitten 2.14a, 2.14b, 2.18a, 2.18b, in denen die Leiterbahnspuren zur Schwenkachse A hin ausgerichtet sind.

In der Figur 3c ist die dritte Lage der Mehrschichtleiterplatte 2 dargestellt. Auf dieser dritten Lage sind in der linken Windungseinheit 2.15 sieben Abschnitte 2.15a, 2.15b der Leiterbahnspur auf, in denen die Leiterbahnspuren zur Schwenkachse A hin ausgerichtet sind auf, während in der rechten Windungseinheit 2.16 zwei Abschnitte 2.16a, 2.16b dargestellt sind, innerhalb derer sechs Leiterbahnspuren radial verlaufen.

Damit diese ungleiche Verteilung in den Lagen zwei bis dreizehn keine Ungleichmäßigkeiten im Betriebsverhalten des Voice-Coil-Motors V verursacht, sind die zweite und dritte (sowie die fünfte und sechste, usw.) Lage spiegelbildlich ausgestaltet, so dass über den sechs Leiterbahnspuren der Windungseinheit 2.13 in den Abschnitten 2.13a, 2.13b die sieben Leiterbahnspuren der Windungseinheit 2.15 in den Abschnitten 2.15a, 2.15b zu liegen kommen. Nachdem die Mehrschichtleiterplatte 2 zwölf innenliegende Lagen aufweist, kompensiert sich die oben beschriebene ungleiche Verteilung auf den einzelnen innenliegenden Lagen in der Weise, dass durch die Mehrschichtleiterplatte 2 ein gleichmäßiges Magnetfeld erzeugbar ist. Die äußeren Lagen, also die erste und die vierzehnte Lage, sind ohnehin gleichmäßig mit stets sechs Leiterbahnspuren, die zur Schwenkachse A hin ausgerichtet sind, ausgestaltet.

In einer Abwandlung der Erfindung kann der Rotor einen oder mehrere Permanentmagnete aufweisen. In diesem Fall würde der Stator zwei Leiterplatten umfassen, zwischen denen der oder die Permanentmagneten schwenkbar gelagert sind. Die Leiterbahnspuren auf den entsprechenden Leiterplatten weisen auch bei dieser Bauweise mehr als zwei Abschnitte auf, innerhalb derer die Leiterbahnspuren zur Schwenkachse A hin ausgerichtet sind.

## Patentansprüche

1. Voice-Coil-Motor (V) bestehend aus
- einem Stator (S) und
- einem Rotor (R), welcher relativ zum Stator (S) schwenkbar um eine Schwenkachse (A) gelagert ist,
wobei der Rotor (R) und / oder der Stator (S) eine Leiterplatte (2) mit mindestens einer Leiterbahn (2.1) aufweist, und die mindestens eine Leiterbahn (2.1) derart ausgebildet ist, dass diese in einer Ebene zumindest eine Windungseinheit (2.11 bis 2.18) bildet, welche aus mehreren Leiterbahnspuren besteht, **dadurch gekennzeichnet, dass** innerhalb einer Windungseinheit (2.11 bis 2.18) mehr als zwei Leiterbahnspuren einen Abschnitt (2.11 a, 2.11 b bis 2.18a, 2.18b) aufweisen, in welchem die jeweilige Leiterbahnspur zur Schwenkachse (A) hin ausgerichtet ist.

2. Voice-Coil-Motor (V) gemäß dem Anspruch 1, **dadurch gekennzeichnet, dass** die Leiterplatte (2) am Rotor (R) befestigt ist.

3. Voice-Coil-Motor (V) gemäß dem Anspruch 1 oder 2, **dadurch gekennzeichnet, dass** mehr als 50%, insbesondere mehr als 75% aller Leiterbahnspuren einen Abschnitt (2.11 a, 2.11 b bis 2.18a, 2.18b) aufweisen, in welchem die jeweilige Leiterbahnspur zur Schwenkachse (A) hin ausgerichtet ist.

4. Voice-Coil-Motor (V) gemäß einem der vorhergehenden Ansprüche, **dadurch gekennzeichnet, dass** innerhalb einer Windungseinheit (2.11 bis 2.18) Leiterbahnspuren einen Abschnitt (2.11 c, 2.11 d, 2.12c, 2.12d) aufweisen, in welchem die Leiterbahnspuren entlang einer Linie verlaufen, die durch einen Teilkreis gebildet ist, dessen Mittelpunkt (M) auf der Schwenkachse (A) liegt.

5. Voice-Coil-Motor (V) gemäß einem der vorhergehenden Ansprüche, **dadurch gekennzeichnet, dass** mindestens eine Leiterbahn (3.1) derart ausgebildet ist, dass diese mehrere Windungseinheiten (2.11 bis 2.18) in einer Ebene bildet.

6. Voice-Coil-Motor (V) gemäß dem Anspruch 5, **dadurch gekennzeichnet, dass** die Windungseinheiten (2.11 bis 2.18) bezüglich eines Punkts (P), der sich in der Ebene der Windungseinheiten (2.11 bis 2.18) auf der Schwenkachse (A) befindet, im Wesentlichen symmetrisch angeordnet sind.

7. Voice-Coil-Motor (V) gemäß dem Anspruch 5, **dadurch gekennzeichnet, dass** die Windungseinheiten (2.11 bis 2.18) einen spiralähnlichen Verlauf aufweisen, wobei eine Teilanzahl der Windungseinheiten (2.11, 2.13, 2.15, 2.17) im Uhrzeigersinn, und eine Teilanzahl der Windungseinheiten (2.12, 2.14, 2.16, 2.18) entgegen dem Uhrzeigersinn orientiert sind.

8. Voice-Coil-Motor (V) gemäß einem der vorhergehenden Ansprüche, **dadurch gekennzeichnet, dass** die Leiterplatte (2) mehrere Lagen mit jeweils mindestens einer Windungseinheit (2.11 bis 2.18) aufweist.

9. Voice-Coil-Motor (V) gemäß dem Anspruch 8, **dadurch gekennzeichnet, dass** Abschnitte (2.11 a, 2.11 b bis 2.18a, 2.18b; 2.11 c, 2.11d, bis 2.18c, 2.18d) der Leiterbahnspuren der Windungseinheiten (2.11 bis 2.18) auf unterschiedlichen Lagen der Leiterplatte (2) übereinanderliegend angeordnet sind.

10. Voice-Coil-Motor (V) gemäß dem Anspruch 9, **dadurch gekennzeichnet, dass** die Abschnitte (2.11 a, 2.11 b bis 2.18a, 2.18b) der Leiterbahnspuren, in welchem die Leiterbahnspuren zur Schwenkachse (A) hin ausgerichtet sind, auf unterschiedlichen Lagen der Leiterplatte (2) übereinanderliegend angeordnet sind.

11. Positioniergerät, insbesondere Servo-Track-Writer, umfassend
• eine schwenkbare Welle (1) an deren einem Ende (1.1) ein zu positionierendes Element anbringbar ist,
• eine Positionsmesseinrichtung (10), umfassend zwei relativ zueinander bewegbare Teilen (10.1, 10.2), und
• einen Voice-Coil-Motor (V), mit
- einem Stator (S) und
- einem Rotor (R), welcher relativ zum Stator (S) schwenkbar um eine Schwenkachse (A) gelagert ist,
wobei der Rotor (R) und / oder der Stator (S) eine Leiterplatte (2) mit mindestens einer Leiterbahn (2.1) aufweist, und die mindestens eine Leiterbahn (2.1) derart ausgebildet ist, dass diese in einer Ebene zumindest eine Windungseinheit (2.11 bis 2.18) bildet, welche aus mehreren Leiterbahnspuren besteht, **dadurch gekennzeichnet, dass**
innerhalb einer Windungseinheit (2.11 bis 2.18) mehr als zwei Leiterbahnspuren einen Abschnitt (2.11 a, 2.11 b bis 2.18a, 2.18b) aufweisen, in welchem die jeweilige Leiterbahnspur zur Schwenkachse (A) hin ausgerichtet ist.

12. Positioniergerät gemäß dem Anspruch 11, **dadurch gekennzeichnet, dass** die Leiterplatte (2) am Rotor (R) befestigt ist.

13. Positioniergerät gemäß dem Anspruch 11 oder 12, **dadurch gekennzeichnet, dass** die Positionsmesseinrichtung (10) mit einer fotoelektrischen Abtastung, insbesondere nach einem interferentiellen Messprinzip, arbeitet.

14. Positioniergerät, gemäß dem Anspruch 13, **dadurch gekennzeichnet, dass** das erste Teil (10.1) der Positionsmesseinrichtung (10) als transparentes Phasengitter ausgeführt ist, und das zweite Teil (10.2) der Positionsmesseinrichtung (10) ein Reflexionsphasengitter (10.23) umfasst.

15. Positioniergerät, gemäß dem Anspruch 13, **dadurch gekennzeichnet, dass** das erste Teil (10.1) der Positionsmesseinrichtung (10) als Reflexionsphasengitter ausgeführt ist, und das zweite Teil (10.2) der Positionsmesseinrichtung (10) ein transparentes Phasengitter umfasst.
